# DEMANDE DE BREVET EUROPEEN

(11) **EP 0 883 007 A1**
(43) Date de publication de la demande: **09.12.1998**
(21) Numéro de dépôt: 98401332.6
(22) Date de dépôt: 04.06.1998
(51) Int. Cl.: G02B 6/44

(54) **Câble à tube étanche comprenant au moins un conducteur optique**

(30) Priorité: 05.06.1997 FR 9706964
(71) Demandeur: ALCATEL ALSTHOM COMPAGNIE GENERALE D'ELECTRICITE, 75008 Paris (FR)
(72) Inventeur: Bonicel, Jean-Pierre, 92500 Rueil Malmaison (FR)
(74) Mandataire: Feray, Valérie

(57) **Abrégé**

L'invention est relative à un câble à tube étanche (10) contenant au moins une fibre optique (12, 14) et un matériau (16) de remplissage qui maintient la (ou les) fibre(s) dans le tube et assure l'étanchéité longitudinale du tube.

Le taux de remplissage du matériau (16) de maintien de la fibre (12, 14) est inférieur à une limite déterminée de façon à ménager au moins un volume d'expansion (22, 24, 26) dans le tube afin que la pression partielle d'hydrogène soit suffisamment faible pour ne pas provoquer d'atténuation sensible des propriétés de transmission de la fibre optique.

## Description

L'invention est relative à un câble à tube étanche comprenant un ou plusieurs conducteurs optiques.

Les conducteurs optiques sont couramment utilisés dans le domaine des télécommunications. Les informations lumineuses sont généralement transmises à une longueur d'onde d'environ 1300 ou 1550 nanomètres par des fibres optiques à base de silice. Chaque fibre est protégée par des couches en matériau polymère et les couches de protection sont le plus souvent recouvertes d'un autre polymère pigmenté.

Un ensemble de fibres optiques peut être assemblé pour former un ruban. Dans ce cas le matériau du ruban est également un polymère.

Les fibres optiques, individuelles ou en ruban, sont disposées dans un tube métallique ou un tube en matière plastique.

On sait que les fibres optiques ne doivent pas être exposées à l'hydrogène car ce gaz altère leurs propriétés de transmission. L'altération est d'autant plus importante qu'est élevée la pression partielle d'hydrogène à laquelle est soumise la fibre.

Par exemple, lorsque la pression partielle exercée par l'hydrogène est d'une atmosphère, l'atténuation de la fibre augmente d'environ 6 dB/km à une longueur d'onde de 1240 nm. A 1240 nm cette atténuation est sensiblement proportionnelle à la pression partielle d'hydrogène.

On peut noter ici que, bien que les fibres soient utilisées à la longueur d'onde de 1300 ou 1550 nm, on mesure souvent la variation de l'atténuation à la longueur d'onde de 1240 nm car, à cette longueur d'onde, la fibre présente une plus grande sensibilité à l'hydrogène.

L'hydrogène provient, notamment, de la décomposition des polymères constituant les revêtements des fibres ou le matériau d'assemblage des fibres en ruban. Il peut aussi provenir de la décomposition du matériau de remplissage généralement prévu dans un tube afin de permettre le maintien des fibres dans ce tube et de s'opposer à la progression de l'humidité en cas de rupture ou dégradation du tube.

Les décompositions mentionnées ci-dessus interviennent naturellement du fait du vieillissement.

Quand le tube est en matière plastique la porosité de ce matériau permet l'évacuation de l'hydrogène. Par contre, quand le tube est métallique l'hydrogène reste confiné dans le tube et les fibres se dégradent donc progressivement.

Pour remédier à cet inconvénient, on a jusqu'à présent proposé deux solutions.

La première solution consiste à prévoir un matériau absorbant l'hydrogène. Cette solution est onéreuse.

La seconde solution consiste à éviter l'utilisation d'un matériau de remplissage dans le tube. Dans ce cas le câble n'est pas protégé contre la progression de l'eau à l'intérieur du tube et les fibres peuvent être soumises à des vibrations. De plus les fibres peuvent se déplacer à l'intérieur du tube, ce qui peut entraîner des détériorations.

L'invention remédie à ces inconvénients.

Elle est caractérisée en ce que le taux de remplissage du matériau occupant le tube, immobilisant les fibres optiques et assurant l'étanchéité longitudinale du tube est limité de façon à ménager au moins un volume d'expansion pour l'hydrogène, afin de limiter sa pression partielle.

Ce taux de remplissage est par exemple au maximum de 95%.

Ce taux de remplissage peut être déterminé expérimentalement, par exemple en choisissant le taux de remplissage permettant que la pression partielle d'hydrogène ne dépasse pas 0,02 atmosphère environ ; de préférence, la pression partielle d'hydrogène ne doit pas déposser 0,01 atmosphère environ. Ce taux peut être déterminé aussi par la mesure de l'augmentation d'atténuation, à la longueur d'onde de 1240 nm ; dans ce cas on choisit le taux de remplissage de façon telle que cette augmentation ne dépasse pas 0,05 dB/km.

Dans une réalisation, le remplissage partiel du tube est effectué en prévoyant périodiquement, dans la direction longitudinale du tube, des espaces dépourvus de matériau de remplissage. Pour obtenir un remplissage périodiquement interrompu, au cours de la fabrication l'injection de matériau de remplissage s'effectue de façon intermittente.

Dans une seconde réalisation le matériau de remplissage est continu sur la longueur du tube mais occupe seulement une fraction de la section de ce tube. Pour fabriquer un tel câble, le débit de la pompe d'injection du matériau de remplissage est sensiblement plus faible que le débit nécessaire pour effectuer un remplissage complet.

Dans une autre réalisation, on ménage des pores dans le matériau de remplissage, par exemple en injectant un gaz inerte, tel que l'azote, en même temps qu'on introduit du matériau de remplissage. En variante on injecte ce matériau sous forme d'une émulsion, le matériau de remplissage étant par exemple brassé de façon à emprisonner des bulles d'air avant l'injection.

La limite inférieure du taux de remplissage dépend surtout des propriétés du matériau de remplissage, en particulier de sa thixotropie.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma en coupe longitudinale d'un câble à tube selon l'invention,
- la figure 2 est une vue en coupe transversale d'un câble à tube pour une variante, et
- la figure 3 est également une vue en coupe transversale d'un câble à tube pour une autre variante.

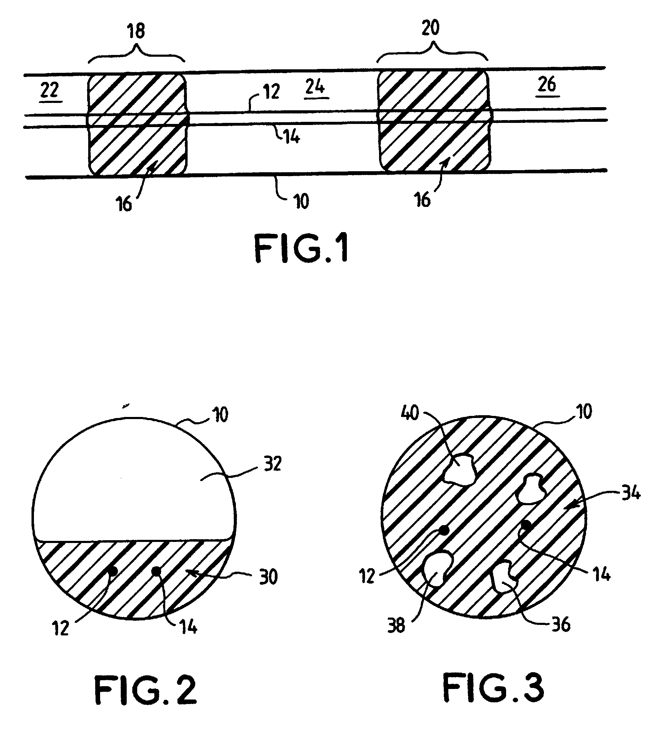

Dans l'exemple représenté sur la figure 1, le câble comporte un tube métallique 10 destiné à contenir de façon étanche des fibres optiques 12, 14 etc..., ainsi qu'un matériau de remplissage 16 destiné à maintenir les fibres dans une position déterminée à l'intérieur du tube 10 et aussi à empêcher la progression de l'eau dans le tube en cas de défaut d'étanchéité de ce dernier à un endroit déterminé. Ce matériau 16 est par exemple une graisse.

Les revêtements des fibres optiques sont des polymères. De même la graisse 16 est également à base de polymère. On sait que les matériaux polymères se décomposent au cours de leur vieillissement et dégagent de l'hydrogène.

L'invention vise à limiter la pression partielle d'hydrogène dans le tube étanche 10.

Le tube est, en direction longitudinale, séparé en tranches alternativement remplies de graisse 16 et dépourvues de graisse 16. On voit ainsi sur la figure 1 que la graisse 16 occupe des tranches 18 et 20 qui sont séparées par des tranches ou espaces 22, 24 et 26 dépourvus de graisse.

Le taux de remplissage, c'est-à-dire le rapport entre, d'une part, le volume occupé par la graisse 16 et les fibres 12, 14 et, d'autre part, le volume total à l'intérieur du tube, doit être à un niveau suffisamment faible pour que l'hydrogène, notamment l'hydrogène résultant du vieillissement de la graisse 16 et du revêtement des fibres, ne dépasse pas une pression partielle telle que l'augmentation de l'atténuation des fibres à 1240 nm soit inférieure à 0,05 dB/km.

On peut également déterminer expérimentalement la valeur du taux de remplissage en l'ajustant de façon telle que la pression partielle d'hydrogène ne dépasse pas 0,01 atmosphère environ. De façon plus générale, la pression partielle d'hydrogène peut atteindre jusqu'à 0,02 atmosphère environ sans que les conséquences sur l'atténuation des fibres soient préjudiciables à la qualité de la transmission.

L'augmentation d'atténuation et la pression partielle d'hydrogène sont mesurées après un vieillissement accéléré par un chauffage à 85°C pendant sept jours.

Le taux de remplissage maximum qui résulte de ces contraintes est variable. Il dépend de la nature des matériaux composant les revêtements des fibres et la graisse. Il dépend aussi de la nature du métal du tube, en particulier l'étanchéité à l'hydrogène peut varier. Ainsi les métaux lourds sont plus poreux que les métaux légers.

Le taux de remplissage maximum est habituellement de l'ordre de 95%.

Le taux de remplissage minimum dépend des propriétés mécaniques du matériau de remplissage 16, c'est-à-dire de sa thixotropie.

Il faut en effet que le matériau 16 ait des propriétés telles qu'il assure la fonction de maintien des fibres ; il faut aussi que ce matériau ait une viscosité permettant le déplacement radial des fibres dans le tube au cours de la fabrication et au cours de l'utilisation du câble.

A titre d'exemple non limitatif, dans le cas de la figure 1 le taux de remplissage minimum est de l'ordre de 5%.

Pour fabriquer le tube représenté sur la figure 1, on injecte la graisse 16 à l'aide d'un dispositif usuel (non montré) mais au lieu d'effectuer une injection continue on fait fonctionner le dispositif de façon intermittente.

Dans la variante représentée sur la figure 2, le matériau de remplissage 30 est continu sur la longueur du tube 10. Par contre ce matériau de remplissage n'occupe qu'une fraction de la section du tube 10. En d'autres termes, en coupe transversale le tube 10 comporte une partie vide 32. Il est à noter que, dans ce cas, les fibres optiques 12, 14 se trouvent, bien entendu, dans le matériau de remplissage et non dans la partie vide 32.

Pour fabriquer une tel tube on utilise aussi un dispositif classique d'injection de graisse, le taux de remplissage étant obtenu en choisissant un débit d'injection suffisamment faible. De façon plus précise, le taux de remplissage est proportionnel au débit d'injection.

Dans l'exemple représenté sur la figure 3, le matériau de remplissage 34 présente des pores 36, 38, 40, etc... Ces pores sont remplis d'un gaz inerte tel que l'azote ou l'air.

Pour fabriquer le tube représenté sur la figure 3, dans une réalisation, on injecte le gaz inerte en même temps que le produit de remplissage 34.

On peut également combiner l'injection de gaz et l'émulsion préalable.

Dans un autre exemple, le matériau de remplissage 34 est émulsionné avant son injection.

Dans le cas des exemples décrits avec les figures 2 et 3, comme dans l'exemple décrit avec la figure 1, le taux de remplissage doit être suffisant pour que le matériau 16 assure sa fonction d'immobilisation des fibres. En particulier il doit empêcher ou limiter les déplacements longitudinaux et les vibrations. Par contre, notamment pour la fabrication, la (ou les) fibre(s) doit pouvoir se déplacer dans la graisse.

L'invention fournit une solution particulièrement simple et économique pour s'opposer aux effets du dégagement d'hydrogène dans les tubes étanches. Elle permet de se passer d'un matériau, en général onéreux, de piégeage de l'hydrogène, tout en assurant un maintien convenable des fibres dans le tube.

L'invention s'applique quel que soit le nombre de fibres optiques (ou rubans) contenus dans un tube.

## Revendications

1. Câble à tube étanche (10) contenant au moins une fibre optique (12, 14) et un matériau (16 ; 30 ; 34) de remplissage qui maintient la (ou les) fibre(s) dans le tube et assure l'étanchéité longitudinale du tube,
**caractérisé en ce que** le taux de remplissage du matériau (16 ; 30 ; 34) de maintien de la fibre est inférieur à une limite déterminée de façon à ménager au moins un volume d'expansion (22, 24, 26 ; 32 ; 36, 38, 40) dans le tube afin que la pression partielle d'hydrogène soit suffisamment faible pour ne pas provoquer d'atténuation sensible des propriétés de transmission de la ou des fibre(s) optique(s).

2. Câble selon la revendication 1, caractérisé en ce que le taux de remplissage est au plus de l'ordre de 95%.

3. Câble selon la revendication 1 ou 2, caractérisé en ce que le taux de remplissage est tel que la pression partielle d'hydrogène ne dépasse pas 0,02 atmosphère environ, et de préférence 0,01 atmosphère environ.

4. Câble selon l'une quelconque des revendications 1 à 3, caractérisé en ce que le taux de remplissage est tel que l'augmentation de l'atténuation d'une fibre ne dépasse pas 0,05 dB/km environ après un vieillissement accéléré, par exemple à 85°C pendant sept jours, cette augmentation d'atténuation étant mesurée à 1300, 1550 nm ou 1240 nm environ.

5. Câble selon l'une quelconque des revendications précédentes, caractérisé en ce que le matériau de maintien de la fibre est disposé par tranches (18, 20) le long du tube (10), des tranches remplies étant séparées par des tranches (22, 24, 26) dépourvues de ce matériau (16).

6. Câble selon l'une quelconque des revendications 1 à 4, caractérisé en ce que le matériau de maintien de la fibre est disposé de façon continue le long du tube et n'occupe qu'une fraction de la section de ce dernier.

7. Câble selon l'une quelconque des revendications 1 à 4, caractérisé en ce que le matériau de maintien de la fibre est poreux.

8. Câble selon la revendication 7, caractérisé en ce que les pores (36, 38, 40) contiennent un gaz inerte, par exemple de l'azote ou de l'air.

9. Câble selon l'une quelconque des revendications précédentes, caractérisé en ce que le tube (10) est métallique.
